# EUROPÄISCHE PATENTSCHRIFT

(11) **EP 3 294 461 B1**
(45) Veröffentlichungstag und Bekanntmachung des Hinweises auf die Patenterteilung: **25.03.2020**
(21) Anmeldenummer: 16724325.2
(22) Anmeldetag: 09.05.2016
(51) Int. Cl.: B04C 5/04, B04C 5/081, C10J 3/42, C10J 3/26, C10J 3/72, C10J 3/84, C10B 27/00, C10B 49/02, C10B 53/02, F23B 80/00, F23C 5/32

(54) **FESTBETTVERGASER ZUM ERZEUGEN EINES PRODUKTGASES AUS KOHLENSTOFFHALTIGEN EINSATZSTOFFEN MIT EINEM DREHBAREN ROST**
SOLID BED GASIFIER FOR PRODUCING A PRODUCT GAS FROM CARBON CONTAINING FEED MATERIALS WITH A ROTARY GRATE
GAZOGÈNE DE LIT SOLIDES AVEC UNE GRILLE ROTATIVE POUR PRODUIRE UN GAZ À PARTIR D'UN MATÉRIAU CARBONÉ

(30) Priorität: 13.05.2015 DE 102015208923
(43) Veröffentlichungstag der Anmeldung: 21.03.2018
(73) Patentinhaber: Rosmarin Holdings Limited, Ramsey IM8 2LQ (IM)
(72) Erfinder: DRESSLER, Horst, 92360 Mühlhausen (DE); HOFMEISTER, Michael, 94269 Rinchnach (DE)
(74) Vertreter: Ernicke, Moritz
(86) Internationale Anmeldenummer: PCT/EP2016/060358
(87) Internationale Veröffentlichungsnummer: WO 2016/180793

(56) Entgegenhaltungen:
- EP-A2- 1 983 262
- DE-A1-102010 033 646
- US-A- 1 862 477
- US-A- 2 303 406

## Beschreibung

Die Erfindung betrifft einen Festbettvergaser zum Erzeugen eines Produktgases aus kohlenstoffhaltigen Einsatzstoffen mit einem drehbaren Rost.

Festbettvergaser zum Erzeugen eines brennbaren Produktgases aus Biomassepellets, insbesondere aus Hackschnitzel oder Holzpellets, zeichnen sich durch einen vergleichsweise einfachen Aufbau aus. Man unterscheidet Gegenstrom- und Gleichstromvergaser. Beim Gegenstromvergaser ist die Strömungsrichtung der Verbrennungsluft und des Produktgases einerseits und der Zuführrichtung der Biomasseteilchen entgegengesetzt und beim Gleichstromvergaser stimmt die Zuführrichtung der Biomasseteilchen mit der Strömungsrichtung von Verbrennungsluft und Produktgas überein. In Festbettvergasern werden verschiedene Reaktionszonen, nämlich Trocknungs-, Pyrolyse-, Oxidations- und Reduktionszone unterschieden, in denen verschieden thermochemische Reaktionen ablaufen.

Eine Übersicht zum Thema Festbettvergasung von Biomasseteilchen ist aus dem Vortrag "Festbett-Vergasung -Stand der Technik (Überblick)" von Lettner, Haselbacher und Timmerer auf der Tagung "Thermo-chemische Biomasse-Vergasung für eine effiziente Strom/Kraftstoffbereitstellung - Erkenntnisstand 2007" im Februar 2007 in Leipzig (http://www.holzgasjournal.de/download/2_Stufen_vergaser_1.pdf) bekannt. In dieser Übersicht ist ein Gleichstromschachtvergaser erläutert, bei dem die Biomasseteilchen von oben mit der Schwerkraft dem Vergaserbehälter zugeführt werden. Die Verbrennungsluft wird im mittleren Bereich über Düsen zugeführt und das Produktgas wird aus dem unteren Bereich des Vergaserbehälters abgezogen. In diesem bekannten Festbettvergaser bildet sich von oben nach unten die Trocknungs- Pyrolyse-, Oxidations- und Reduktionszone aus. Die Oxidationszone bildet sich im Bereich der Luftzuführung aus und soll auf diese Zone begrenzt bleiben, die Reduktionszone darunter, unmittelbar über dem Rost. Der Produktgasabzug erfolgt aus dem Bereich des Vergaserbehälters unter dem Rost in dem sich auch die durch den Rost fallende kleinteilige Asche ansammelt. Die Öffnungen in dem Rost müssen einerseits klein genug sein, so dass die schüttbaren Biomasseteilchen durch den Rost getragen werden und andererseits groß genug sein, so dass Ascheteilchen und Produktgas hindurchtreten können. Wenn die Öffnungen zu groß werden, besteht die Gefahr, das Biomasseteilchen hindurchfallen oder in den Öffnungen steckenbleiben. Letzteres kann im Zusammenwirken mit den Ascheteilchen zum Zubacken oder Zusetzen der Öffnungen führen. Auch durch Ascheschmelze oder Teer können die Öffnungen zusetzen. Diese Problematik wird verschärft, wenn der Rost nicht von unten nach oben, sondern von oben nach unten von Produktgas durchströmt werden muss.

Aus der DE 2927240 A ist ein Festbettvergaser zum Erzeugen von Produktgas aus schüttbaren Biomasseteilchen bekannt, bei dem Asche und Schlacke über einen am Reaktorboden angeordneten Austragsförders in Form eines motorisch drehbaren Rostes aus dem Reaktorbehälter abgezogen werden. Der Durchmesser des Rostes ist kleiner als der Innendurchmesser des Reaktorbehälters, so dass am Rande des Reaktorbehälters ein Ringspalt verbleibt, über den die Feststoffe in einen Abzugsschacht gelangen. Der Austragsförder umfasst mehrere Scheiben mit unterschiedlichen Durchmessern und dient zum Zerkleinern der Asche und Schlacke.

US2303406A offenbart einen automatischen Verbrennungsofen mit einem Rost, welcher schräge Oberflächen aufweist, wobei der Rost vorzugsweise als hohler Kegelstumpf ausgebildet ist. US1862477A offenbart ebenfalls einen Verbrennungsofen mit einem drehbaren Rost mit schlitzförmigen Öffnungen, wobei der Verbrennungsofen mit einem Verteilerarm ausgestattet ist, der bei der Drehung des Rosts den Brennstoff im oberen Bereich ausgleicht und zur Mitte hin befördert sowie die Asche im unteren Bereich auf dem Rost nach außen transportiert.

DE 10 2010 033646 A1 offenbart einen Schachtvergaser mit einem drehbaren Rost in Form eines Pyramidenrosts mit in radialer Richtung bereichsweise überlappenden Ringabschnitten, über welche die Asche nach außen rutscht.

Ausgehend von DE 10 2010 033646 A1 oder DE 2927240 A ist es Aufgabe der vorliegenden Erfindung, einen Festbettvergaser mit einem von oben durchströmbaren Rost zum Abstützen der Biomasseteilchen und zum Abzug von Asche und Produktgas anzugeben, der weniger zu Zusetzen der Öffnungen in dem Rost neigt.

Die Lösung dieser Aufgabe erfolgt durch die Merkmale des Anspruchs 1.

Bei einem Festbettvergaser zum Erzeugen eines Produktgases aus kohlenstoffhaltigen Einsatzstoffen, insbesondere aus schüttbaren Biomasseteilchen, mit einem drehbaren Rost kann nahezu sicher verhindert werden, dass die schlitzförmigen Öffnungen während des Betriebs zusetzen oder verstopfen. Durch Variation der Drehgeschwindigkeit des Rostes und/oder der Zeitintervalle in denen der Rost gedreht wird, kann der erhöhten Gefahr des Zusetzens oder Verstopfen des Rostes bei ungünstigen Betriebsbedingungen des Festbettvergasers gezielt entgegengewirkt werden.

Durch die Drehung des Rostes wirkt dieser als Hobel und Asche- und Schlackeklumpen werden zerkleinert und durch die Drehbewegung durch die schlitzförmigen Öffnungen gedrückt. Durch die Schlitzform der Öffnungen können trotz großer Durchtrittsfläche auch kleine Biomasseteilchen abgestützt werden. Durch die konische Ausgestaltung der Öffnungen in dem drehbaren Rost wird die Gefahr des Verstopfens der schlitzförmigen Öffnungen für Asche und Produktgas erheblich verringert und die schlitzförmigen Öffnungen wirken wie ein Hobel. Durch die zentrale domförmige Abdeckung wird verhindert, dass sich in der Mitte des Hauptteils aufgrund der geringen bzw. nicht vorhandenen Bewegung des Rostes gegenüber der Biomasse Asche oder Schlacke anlagern. Hierbei ist auch zu berücksichtigen, dass in der Mitte keine Öffnungen vorhanden sein können, da in der Mitte des Hauptteils die Antriebswelle ansetzt bzw. montiert ist. Durch die domförmige Gestaltung der Abdeckung erfolgt durch die Drehung des Rostes ein seitliches Abscheren von Asche und Schlacke, so dass diese in den Bereich mit den schlitzförmigen Öffnungen befördert werden.

Die Dimensionierung und die Anordnung der schlitzförmigen Öffnungen in dem Rost gemäß Anspruch 2 und 3 haben sich in der Praxis als vorteilhaft gezeigt.

Gemäß der Ausgestaltung nach Anspruch 5 erfolgt die Luftzufuhr durch die Biomasseteilchenschüttung in dem rohrförmigen Vergaserbauteil. Hierdurch ergibt sich eine Gleichverteilung der Luft. Durch diese Gleichverteilung sind in der Oxidationszone im Querschnitt betrachtet kaum Temperaturunterschiede vorhanden. Dies hat zur Folge, dass auch Pyrolysegase, welche über der Oxidationszone entstehen, gleichmäßig durch die Oxidationszone strömen. Durch diese Gleichmäßigkeit der Gas und Luftströmungen lässt sich ein Produktgas mit geringen Teermengen erzeugen. Diese Ausgestaltung ist Gegenstand der DE102014225166.4, auf deren Offenbarung vollinhaltlich Bezug genommen wird.

Durch die vorteilhafte Ausgestaltung nach Anspruch 6 wird der Rost thermisch von dem Vergaserbehälter entkoppelt und zugleich kann durch die Breite des umlaufenden Rings die Strömungsgeschwindigkeit des Gases im Festbettvergaser beeinflusst werden.

Durch die vorteilhafte Ausgestaltung nach Anspruch 7 kann durch unterschiedliche Einsätze zusätzlich die Strömungsgeschwindigkeit des Gases im Festbettvergaser gezielt beeinflusst werden. Zusätzlich wird der Vergaserbehälter durch diese Einsätze thermisch isoliert. Durch die Einsätze wird ein Baukastensystem ermöglicht, durch den ein vorgegebener Vergaserbehälter gezielt modifiziert werden kann.

Die übrigen Unteransprüche beziehen sich auf weiter vorteilhafte Ausgestaltungen der Erfindung.

Weitere Einzelheiten, Merkmale und Vorteile der Erfindung ergeben sich aus der nachfolgenden Beschreibung vorteilhafter Ausführungsformen anhand der Zeichnung.

Es zeigt
Fig. 1 eine schematische Schnittdarstellung einer beispielhaften Ausgestaltung des Festbettvergasers mit Temperaturmesseinrichtung und drehbarem Rost.
Fig. 2 eine perspektivische Aufsicht auf eine beispielhafte Ausgestaltung eines drehbaren Rostes für einen Festbettvergaser; und
Fig. 3 eine Schnittansicht entlang der Linie A - A in Fig. 2.

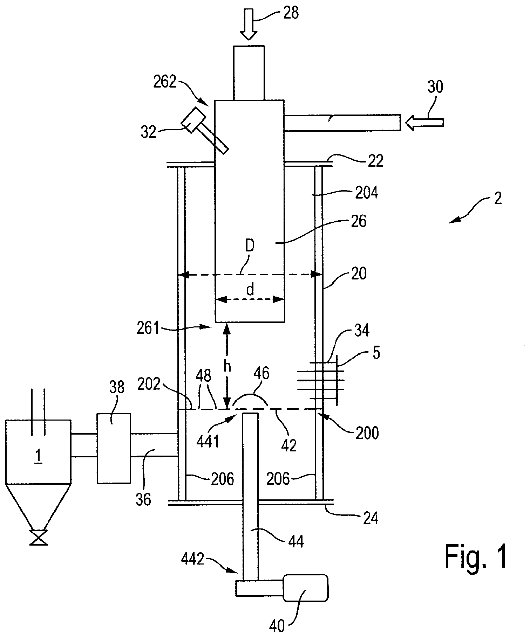

Fig. 1 zeigt eine schematische Darstellung einer beispielhaften Ausgestaltung eines Festbettvergasers 2 gemäß der vorliegenden Erfindung. Der Festbettvergaser 2 umfasst einen rohrförmigen Vergaserbehälter 20, dessen Enden mit einem oberen Deckel 22 und einen unteren Deckel 24 verschlossen sind. Ein rohrförmiges Vergaserbauteil 26 mit einem offenen Ende 261 und einem geschlossenen Ende 262 ragt mit dem offenen Ende 261 in den Vergaserbehälter 20 hinein. Das geschlossene Ende 262 des Vergaserbauteils 26 ragt durch den oberen Deckel 22 aus dem Vergaserbehälter 20 heraus. Das offene Ende 261 des Vergaserbauteils 26 kommt in etwa in der Mitte des Vergaserbehälters 20 zu liegen. Im Abstand h unter dem offenen Ende 261 des Vergaserbauteils 26 ist ein drehbarer Rost 4 angeordnet, der durch einen motorischen Antrieb 40, der den unteren Deckel 24 durchsetzt, periodisch bewegt werden kann. Der Durchmesser des Rostes 4 ist kleiner als der Innendurchmesser des Vergaserbehälters 20 an dieser Stelle, so dass ein Ringspalt 200 verbleibt. Dieser Ringspalt 200 wird durch einen umlaufenden Ring 202 abgedeckt, der über Stützen 206 mit dem unteren Deckel 24 des Vergaserbehälters (20) verbunden ist. Hierdurch wird der Rost 4 thermisch von dem Vergaserbehälter 20 entkoppelt und zugleich kann durch die Breite des umlaufenden Rings 202 die Strömungsgeschwindigkeit des Gases im Festbettvergaser beeinflusst werden.

Durch säulenförmige Einsätze 204 über dem Rost 4 und zwischen dem Vergaserbehälter 20 und dem Vergaserbauteil 26 lässt sich die Strömungsgeschwindigkeit des Gases im Festbettvergaser zusätzlich gezielt beeinflussen. Zusätzlich wird der Vergaserbehälter 20 durch diese Einsätze 204 thermisch isoliert. Durch die Einsätze 204 wird ein Baukastensystem ermöglicht, durch den ein vorgegebener Vergaserbehälter 20 gezielt modifiziert werden kann.

In das aus dem Vergaserbehälter 20 herausragende geschlossene Ende 262 des Vergaserbauteils 26 münden eine Zuführung 28 für kohlenstoffhaltige Einsatzstoffe in Form von schüttbaren Biomasseteilchen, eine Luftzuführung 30 zur Zuführung von Verbrennungsluft in den Vergaserbehälter 20 und ein Füllstandssensor 32, mit dem sich der Füllstand der Biomasseteilchen im rohrförmigen Vergaserbauteil 26 ermitteln und überwachen lässt. Im Bereich des offenen Endes 261 des Vergaserbauteils 26 ist ein Revisionsschacht 34 vorgesehen, der die Außenwand des Vergaserbehälters 20 durchdringt. Der Revisionsschacht 34 wird durch einen Abdeckflansch 50 verschlossen, der Teil einer Temperaturmesseinrichtung 5 ist. Durch die Temperaturmesseinrichtung 5 kann die Temperatur im Vergaserbehälter 20 überwacht werden. Über dem Revisionsschacht 34 können bei Stillstand des Reaktors, Wartungsarbeiten, Reinigungsarbeiten im Reaktorbehälterinneren vorgenommen werden.

Im Bereich unter dem Rost 4 wird über einen Produktgasabzug 36 Produktgas aus dem Vergaserbehälter 20 abgezogen, in einem Wärmetauscher 38 gekühlt in einem nachgeschalteten Zyklonabscheider 1 gereinigt. Die durch den Rost 4 fallende Asche wird durch den Produktgasstrom über den Produktgasabzug 36 aus dem Festbettvergaser 2 ausgetragen.

Sowohl der rohrförmige Vergaserbehälter 20 als auch das rohrförmige Vergaserbauteil 26 weisen einen kreisringförmigen Querschnitt auf und sind konzentrisch zueinander angeordnet. Das rohrförmige Vergaserbauteil 26 weist einen Innendurchmesser d auf, der kleiner ist als der Innendurchmesser D des rohrförmigen Vergaserbehälters 20.

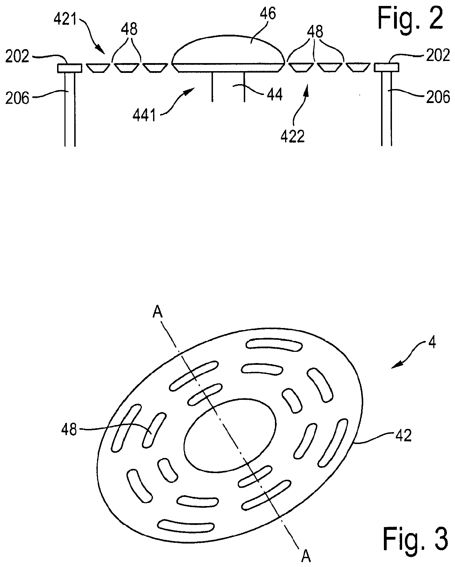

Figuren 2 und 3 zeigen den drehbaren Rost 4 für einen Festbettvergaser nach Fig. 1 im Detail. Der drehbare Rost 4 umfasst einen scheibenförmigen Hauptteil 42 zum Abstützen der kohlenstoffhaltigen Einsatzstoffe bzw. der Biomasseteilchen. Der Hauptteil 42 ist mittig auf einer Antriebswelle 44 montiert. Die Antriebswelle 44 umfasst ein erstes Ende 441 und ein zweites Ende 442. Mit dem ersten Ende 441 ist die Antriebswelle mit der Mitte des Hauptteils 42 verbunden. Die Antriebswelle 44 durchsetzt den unteren Deckel 24 des Vergaserbehälters 20 und das zweite Ende 442 ist mit dem motorischen Antrieb 40 verbunden. Durch den motorischen Antrieb 40 kann der Rost 4 zu unterschiedlichen Zeiten und unterschiedlich lange mit unterschiedlichen Winkelgeschwindigkeiten in Drehung versetzt werden.

In konzentrischen Kreisen um den Mittelpunkt des Hauptteils 42 sind eine Mehrzahl von schlitzförmigen Öffnungen 48 für den Durchtritt von Asche und Produktgas durch das Hauptteil 42 vorgesehen. Im Schnitt betrachtet - siehe Fig. 2 - weiten sich diese Öffnungen 48 von der Oberseite 421 zur Unterseite 422 des Hauptteils 42 konisch auf, wie dies aus Fig.2 zu ersehen ist. Durch diese Konizität wird zum einen die Wahrscheinlichkeit verringert, dass sich Asche- oder Schlackeklumpen in den Öffnungen 48 festsetzen, da die engste Stelle der Öffnungen 48 an der Oberseite 421 des Hauptteils 42 sehr dünn und nur eine kantenförmige Einschnürung darstellt. Zum anderen wirkt dies konische Ausgestaltung der Öffnungen 48 bei drehen des Rostes 4 wie ein Hobel, der Kohle, Asche und Schlacke "abhobelt" und so von der Oberseite 421 zur Unterseite 422 des Hauptteils 42 befördert.

Im zentralen Bereich des Hauptteils über der Drehachse 44 ist auf der Oberseite 421 des Hauptteils 42 eine domförmige Abdeckung 46 angeordnet. Durch die zentrale domförmige Abdeckung 46 wird verhindert, dass sich in der Mitte des Hauptteils 42 aufgrund der geringen bzw. nicht vorhandenen Bewegung des Rostes 4 gegenüber der Biomasse Asche oder Schlacke anlagern. Hierbei ist auch zu berücksichtigen, dass in der Mitte des Hauptteils 42 - siehe Fig. 3 - keine Öffnungen 48 vorhanden sein können, da in der Mitte des Hauptteils 42 die Antriebswelle 44 ansetzt bzw. montiert ist. Durch die domförmige Gestaltung der Abdeckung 46 erfolgt durch die Drehung des Rostes 4 über die Antriebswelle 44 und den motorischen Antrieb 40 ein seitliches Abscheren von Asche und Schlacke, so dass diese in den Bereich mit den schlitzförmigen Öffnungen befördert werden.

### Bezugszeichenliste:

- h: Abstand zwischen 261 und 44
- d: Innendurchmesser von 26
- D: Innendurchmesser von 20

- 1: Zyklonabscheider
- 2: Festbettvergaser
- 20: Vergaserbehälter
- 200: Ringspalt
- 202: Ring
- 204: säulenförmiger Einsatz
- 206: Stützen für 202
- 22: oberer Deckel
- 24: unterer Deckel
- 26: Vergaserbauteil
- 261: offenes Ende von 26
- 262: geschlossenes Ende von 26
- 28: Zuführung für kohlenstoffhaltige Einsatzstoffe
- 30: Luftzuführung
- 32: Füllstandssensor
- 34: Revisionsschacht
- 36: Produktgasabzug
- 38: Wärmetauscher
- 4: drehbarer Rost
- 40: motorischer Antrieb
- 42: Hauptteil
- 421: Oberseite von 42
- 422: Unterseite von 42
- 44: Antriebswelle
- 441: erstes Ende von 44
- 442: zweites Ende von 44
- 46: domförmige Abdeckung
- 48: schlitzförmige Öffnungen
- 5: Temperaturmesseinrichtung
- 50: Abdeckflansch

## Patentansprüche

1. Festbettvergaser (2) zum Erzeugen eines Produktgases aus kohlenstoffhaltigen Einsatzstoffen, insbesondere aus schüttbaren Biomasseteilchen, mit einem Vergaserbehälter (20),
einer Zuführung (28) für die kohlenstoffhaltigen Einsatzstoffe im oberen Bereich des Vergaserbehälters (20),
einem im unteren Bereich des Vergaserbehälters (20) angeordneten, drehbaren Rost (4) zur Abstützung der kohlenstoffhaltigen Einsatzstoffe,
einer Luftzuführung (30) zur Zuführung von Verbrennungsluft in den Vergaserbehälter (20),
einem aus dem Vergaserbehälter (20) herausführenden Produktgasabzug (36) zum Abführen des Produktgases aus dem Vergaserbehälter (20),
wobei der drehbare Rost (4) ein Hauptteil (42) mit einer Oberseite (421) und einer Unterseite (422) aufweist, und
einer zentralen Antriebswelle (44), die ein erstes (441) und ein zweites Ende (442) aufweist und sich von der Unterseite (422) des Hauptteils (42) wegerstreckt, wobei das erste Ende drehfest mit der Mitte des Hauptteils (42) verbunden ist,
**dadurch gekennzeichnet, dass** das Hauptteil (42) scheibenförmig ist und schlitzförmige Öffnungen (48) für den Durchtritt von Gas und Ascheteilchen aufweist, deren Querschnitt sich in Durchtrittsrichtung von der Oberseite (421) zu der Unterseite (422) konisch vergrößert,
dass der Produktgasabzug (36) aus dem Bereich unter dem Rost (4) herausführt, und
dass über der zentralen Antriebswelle (44) mittig auf der Oberseite (421) des Hauptteils (42) eine domförmige Abdeckung (46) angeordnet ist.

2. Festbettvergaser nach Anspruch 1, **dadurch gekennzeichnet, dass** die schlitzförmigen Öffnungen (48) des drehbaren Rosts (4) sich konzentrisch um den Mittelpunkt des Hauptteils (42) erstrecken und in radialer Richtung über das scheibenförmige Hauptteil (42) verteilt sind.

3. Festbettvergaser nach Anspruch 1 oder 2, **dadurch gekennzeichnet, dass** die Fläche der schlitzförmigen Öffnungen (48) an der Oberseite (421) des Hauptteils (42) zwischen 20% und 70% und vorzugsweise zwischen 40% und 60% der Fläche der Oberseite (421) des Hauptteils (42) beträgt.

4. Festbettvergaser nach einem der vorhergehenden Ansprüche, **gekennzeichnet durch** einen motorischen Antrieb (40), der mit dem zweiten Ende der zentralen Antriebswelle (44) verbunden ist.

5. Festbettvergaser nach einem der vorhergehenden Ansprüche 1 bis 4, **dadurch gekennzeichnet,**
**dass** ein rohrförmiges Vergaserbauteil (26) in den Vergaserbehälter (20) hineinragt,
**dass** das rohrförmige Vergaserbauteil (26) ein offenes Ende (261) aufweist, das im Vergaserbehälter (20) angeordnet ist,
**dass** das rohrförmige Vergaserbauteil (26) ein geschlossenes Ende (262) aufweist, das aus dem Vergaserbehälter (20) herausragt oder mit der Oberseite des Vergaserbehälters (20) abschließt,
**dass** der Innendurchmesser (d) des rohrförmigen Vergaserbauteils (26) kleiner als der Innendurchmesser (D) des Vergaserbehälters (20) ist,
**dass** das rohrförmige Vergaserbauteil (26) so im Vergaserbehälter (20) angeordnet ist, dass zwischen dem offenen Ende (261) des rohrförmigen Vergaserbauteils (26) und dem Rost (4) ein Abstand (h) verbleibt,
**dass** die Zuführung (28) für die kohlenstoffhaltigen Einsatzstoffe in das geschlossenen Ende (262) des rohrförmigen Vergaserbauteils (26) mündet, und dass die Luftzuführung (30) in das geschlossene Ende (262) des rohrförmigen Vergaserbauteils (26) mündet.

6. Festbettvergaser nach einem der vorhergehenden Ansprüche, **dadurch gekennzeichnet, dass** der Durchmesser des Rostes (4) kleiner ist als der Innendurchmesser D des Vergaserbehälters (20) an der Position des Rostes (4), so dass ein Ringspalt (200) verbleibt, dass der Ringspalt (200) durch einen umlaufenden Ring (202) abgedeckt ist, und dass der umlaufende Ring (202) fest mit dem unteren Deckel (24) des Vergaserbehälter (20) verbunden ist.

7. Festbettvergaser nach einem der vorhergehenden Ansprüche, **dadurch gekennzeichnet, dass** im Bereich über dem Rost (4) säulenförmige Einsätze (204) mit unterschiedlichen Durchmessern anordenbar sind.

## Claims

1. Fixed-bed gasifier (2) for generating a product gas from carbon-containing feed materials, in particular from pourable biomass particles, comprising a gasifier container (20),
a feed (28) for the carbon-containing feed materials in the upper region of the gasifier container (20),
a rotatable grate (4) which is arranged in the lower region of the gasifier container (20) and intended for supporting the carbon-containing feed materials,
an air feed (30) for feeding combustion air into the gasifier container (20),
a product gas flue (36) leading out of the gasifier container (20) and intended for discharging the product gas from the gasifier container (20),
wherein the rotatable grate (4) has a main part (42) with an upper side (421) and a lower side (422), and
a central drive shaft (44) which has a first end (441) and a second end (442) and extends away from the lower side (422) of the main part (42), wherein the first end is connected to the centre of the main part (42) in a rotationally locked manner,
**characterized in that** the main part (42) is disc-shaped and has slot-shaped openings (48) for the passage of gas and ash particles, the cross section of said openings increasing conically in the passage direction from the upper side (421) to the lower side (422),
**in that** the product gas flue (36) leads out from the region below the grate (4), and
**in that** a dome-shaped covering (46) is arranged above the central drive shaft (44) centrally on the upper side (421) of the main part (42).

2. Fixed-bed gasifier according to Claim 1, **characterized in that** the slot-shaped openings (48) in the rotatable grate (4) extend concentrically around the centre point of the main part (42) and are distributed in the radial direction over the disc-shaped main part (42).

3. Fixed-bed gasifier according to Claim 1 or 2, **characterized in that** the area of the slot-shaped openings (48) on the upper side (421) of the main part (42) is between 20% and 70%, and preferably between 40% and 60%, of the area of the upper side (421) of the main part (42).

4. Fixed-bed gasifier according to one of the preceding claims, **characterized by** a motor drive (40) which is connected to the second end of the central drive shaft (44).

5. Fixed-bed gasifier according to one of the preceding Claims 1 to 4, **characterized**
**in that** a tubular gasifier component (26) projects into the gasifier container (20),
**in that** the tubular gasifier component (26) has an open end (261) which is arranged in the gasifier container (20),
**in that** the tubular gasifier container (26) has a closed end (262) which projects out of the gasifier container (20) or terminates with the upper side of the gasifier container (20),
**in that** the inside diameter (d) of the tubular gasifier component (26) is less than the inside diameter (D) of the gasifier container (20),
**in that** the tubular gasifier component (26) is arranged in the gasifier container (20) in such a way that a distance (h) remains between the open end (261) of the tubular gasifier component (26) and the grate (4),
**in that** the feed (28) for the carbon-containing feed materials opens into the closed end (262) of the tubular gasifier component (26), and
**in that** the air feed (30) opens into the closed end (262) of the tubular gasifier component (26).

6. Fixed-bed gasifier according to one of the preceding claims, **characterized in that** the diameter of the grate (4) is less than the inside diameter D of the gasifier container (20) at the position of the grate (4) such that an annular gap (200) remains, **in that** the annular gap (200) is covered by a peripheral ring (202), and **in that** the peripheral ring (202) is fixedly connected to the lower cover (24) of the gasifier container (20).

7. Fixed-bed gasifier according to one of the preceding claims, **characterized in that** column-shaped inserts (204) having different diameters can be arranged in the region above the grate (4).

## Revendications

1. Gazéificateur (2) à lit fixe servant à former un produit gazeux à partir de matières premières contenant du carbone, en particulier de particules versables de biomasse, le gazéificateur présentant :
un récipient de gazéification (20),
une amenée (28)de matières premières contenant du carbone disposée dans la partie supérieure du récipient de gazéification (20),
une grille rotative (4) qui soutient les matières premières contenant du carbone dans la partie inférieure du récipient de gazéification (20),
une amenée (30) d'air assurant l'apport d'air dans le récipient de gazéification (20),
une extraction (36) de produit gazeux sortant du récipient de gazéification (20) et évacuant les produits gazeux hors du récipient de gazéification (20),
la grille rotative (4) présentant une partie principale (42) dotée d'un côté supérieur (421) et d'un côté inférieur (422),
un arbre central d'entraînement (44) qui présente une première extrémité (441) et une deuxième extrémité (442) et qui déborde du côté inférieur (422) de la partie principale (42), la première extrémité étant reliée à rotation solidaire au milieu de la partie principale (42),
**caractérisé en ce que**
la partie principale (42) a la forme d'une plaque et présente des ouvertures (48) en fente permettant la traversée des gaz et de particules de cendres et dont la section transversale dans la direction de traversée augmente coniquement du côté supérieur (421) au côté inférieur (422),
**en ce que** l'extraction (36) de produit gazeux conduit hors de la zone située en-dessous de la grille (4) et
**en ce qu'**un couvercle bombé (46) est disposé au-dessus de l'arbre central d'entraînement (44) au milieu du côté supérieur (421) de la partie principale (42).

2. Gazéificateur à lit fixe selon la revendication 1, **caractérisé en ce que** les ouvertures (48) en fente de la grille rotative (4) s'étendent concentriquement autour du point central de la partie principale (42) et sont réparties dans la direction radiale à travers la partie principale (42) en forme de plaque.

3. Gazéificateur à lit fixe selon les revendications 1 ou 2, **caractérisé en ce que** la superficie des ouvertures (48) en fente sur la côté supérieur (421) de la partie principale (42) représente entre 20 % et 70 % et de préférence entre 40 % et 60 % de la superficie du côté supérieur (421) de la partie principale (42).

4. Gazéificateur à lit fixe selon l'une des revendications précédentes, **caractérisé par** un entraînement (40) motorisé relié à la deuxième extrémité de l'arbre central d'entraînement (44).

5. Gazéificateur à lit fixe selon l'une des revendications 1 à 4 qui précèdent, **caractérisé en ce que**
un composant tubulaire (26) du gazéificateur pénètre dans le récipient de gazéification (20),
**en ce que** le composant tubulaire (26) du gazéificateur présente une extrémité ouverte (261) disposée dans le récipient de gazéification (20),
**en ce que en ce que** l'extrémité fermée (262) du composant tubulaire (26) du gazéificateur déborde hors du récipient de gazéification (20) ou se raccorde au côté supérieur du récipient de gazéification (20),
**en ce que** le diamètre intérieur (d) du composant tubulaire (26) du gazéificateur est plus petit que le diamètre intérieur (D) du récipient de gazéification (20),
**en ce que** le composant tubulaire (26) du gazéificateur est disposé dans le récipient de gazéification (20) de telle sorte qu'il reste une distance (h) entre l'extrémité ouverte (261) du composant tubulaire (26) du gazéificateur et la grille (4),
**en ce que** l'amenée (28) de matières premières contenant du carbone débouche dans d'extrémité fermée (262) du composant tubulaire (26) du gazéificateur et **en ce que** l'amenée (30) d'air débouche dans l'extrémité fermée (262) du composant tubulaire (26) du gazéificateur.

6. Gazéificateur à lit fixe selon l'une des revendications précédentes, **caractérisé en ce que** le diamètre de la grille (4) est plus petit que de diamètre intérieur D du récipient de gazéification (20) en la position de la grille (4), de telle sorte qu'il reste un interstice annulaire (200), **en ce que** l'interstice annulaire (200) est recouvert par un anneau périphérique (202) et **en ce que** l'anneau périphérique (202) est relié solidairement au couvercle inférieur (24) du récipient de gazéification (20).

7. Gazéificateur à lit fixe selon l'une des revendications précédentes, **caractérisé en ce que** des garnitures (204) en forme de colonnes de différents diamètres peuvent être placées au-dessus de la grille (4) .
